# EUROPÄISCHE PATENTSCHRIFT

(11) **EP 1 467 442 B1**
(45) Veröffentlichungstag und Bekanntmachung des Hinweises auf die Patenterteilung: **21.09.2011**
(21) Anmeldenummer: 04001526.5
(22) Anmeldetag: 24.01.2004
(51) Int. Cl.: H01R 13/60

(54) **Haltevorrichtung für eine Steckdose**
Retaining device for a socket
Dispositif de retenue pour une prise

(30) Priorität: 09.04.2003 DE 20305712 U
(43) Veröffentlichungstag der Anmeldung: 13.10.2004
(73) Patentinhaber: WESTFALIA - Automotive GmbH, 33378 Rheda-Wiedenbrück (DE)
(72) Erfinder: Hermbusch, Gerhard, 33449 Langenberg (DE); Wellnitz, Heinrich, 33378 Rheda-Wiedenbrück (DE)
(74) Vertreter: Kohlmann, Kai

(56) Entgegenhaltungen:
- EP-A- 0 847 881
- DE-A1- 1 450 282
- DE-U1- 8 712 103

## Beschreibung

Die Erfindung betrifft eine Haltevorrichtung für eine Steckdose zur Bildung einer elektrischen Verbindung zwischen einem ziehenden und einem gezogenen Fahrzeug, wobei die Haltevorrichtung ein Basiselement, das am ziehenden Fahrzeug bzw. seiner Anhängevorrichtung montierbar ist, und ein schwenkbares Halteelement für die Steckdose aufweist, das gegenüber dem Basiselement verschwenkbar ist.

Haltevorrichtungen dieser Art sind z.B. aus der DE-U-87 12 103 und der EP 0 847 881 B1 bekannt. Mit den bekannten Steckdosenhaltern ist es möglich, die Steckdose aus einer relativ tiefliegenden, unter einem Stoßfänger herausragenden Betriebsposition in eine höher gelegene Außerbetriebsposition, insbesondere nicht sichtbar in einen Zwischenraum zwischen Stoßfänger und Abschlußblech des Fahrzeugs, wegzuschwenken. Die Haltevorrichtungen mit ihren Steckdosen befinden sich jedoch sowohl in der eingeschwenkten als auch in der ausgeschwenkten Lage in einer Stellung, in der sie jedweder Art von Umwelteinflüssen, wie Spritzwasser, Schmutz, Rollsplitt und dergleichen ausgesetzt sind. Hierbei hat es sich in der Praxis herausgestellt, daß solche Einflüsse häufig und schnell schädlich auf die Haltevorrichtungen und insbesondere ihre gelenkige Verbindung auswirken.

Die Funktionstüchtigkeit des Gelenkmechanismus kann sich infolge dessen verschlechtern bzw. sogar dazu führen, daß eine Schwenkbewegung der Steckdose überhaupt nicht mehr möglich ist.

Weiterhin kann es, insbesondere dann, wenn der Gelenkmechanismus aus Metall besteht, zum Verschleiß der Oberflächenschicht kommen, was zur Folge hat, daß die Metallteile der Gelenkverbindung durch Rost angegriffen werden.

Der Erfindung liegt daher die Aufgabe zugrunde, eine Haltevorrichtung der eingangs genannten Art ohne die vorstehend beschriebenen Nachteile zu schaffen.

Diese Aufgabe wird erfindungsgemäß dadurch gelöst, daß das Basiselement und das schwenkbare Halteelement über eine Rastscheibe miteinander verbunden sind, die in Einbaulage vollständig in eine komplementäre Ausnehmung des schwenkbaren Halteelementes eintaucht. Hiermit läßt sich erreichen, daß die den eigentlichen Schwenkvorgang freigebende Rastscheibe sowohl in eingeschwenkter als auch in ausgeschwenkter Lage des Halteelementes von diesem eingekammert wird. Dies hat den großen Vorteil, daß die Rastscheibe und die Ausnehmung des Halteelements wirkungsvoll gegen Verschmutzung und gegen Korrosion geschützt sind, in letzterem Fall dann, wenn die Rastscheibe und/oder das Halteelement aus Metall bestehen. Es wird somit eine von Umwelteinflüssen unbeeinträchtigte, glatte Funktion des Schwenkmechanismus erreicht.

Bei einer bevorzugten Ausführung ist erfindungsgemäß vorgesehen, daß die Rastscheibe unter Zwischenschaltung einer sie konzentrisch umschließenden Kunststoffhülse in der Ausnehmung des Halteelementes angeordnet ist. Die Rastscheibe ist hierbei mittelbar in der Ausnehmung des Halteelementes angeordnet. Die Kunststoffhülse mit Rastscheibe wird in Einbaulage vollständig von der kreisförmigen Ausnehmung des Halteelementes eingekammert.

Dadurch, daß bei dieser Ausführungsform sowohl die die Rastscheibe aufnehmende Hülse als auch das Halteelement aus Kunststoff bestehen, wird eine Korrosionsbildung in dem kritischen form- bzw. reibschlüssigen Drehbereich zwischen dem Außenmantel der Hülse und dem Innenumfang der kreisförmigen Ausnehmung des Halteelementes sicher verhindert.

Nach einer Ausgestaltung der Erfindung sind in der Ausnehmung des schwenkbaren Halteelementes und an der Rastscheibe ineinandergreifende Formschlußverbindungselemente ausgebildet. Hierbei kann die Formschlußverbindung beispielsweise über komplementäre Verzahnungen oder dergleichen erfolgen. Vorzugsweise wird aber gemäß der Erfindung vorgeschlagen, daß das schwenkbare Halteelement eine kreisförmige Ausnehmung aufweist, in deren Grundfläche verteilt angeordnet vertiefte Rastabschnitte ausgebildet sind, denen in situ an der dem Halteelement zugewandten Stirnfläche der kreisförmigen Rastscheibe vorkragende Einrastmittel, z.B. Nocken oder dergleichen Vorsprünge, zugeordnet sind. Diese greifen in der Verriegelungsposition in die komplementären, d.h. formangepaßten vertieften Rastabschnitte des die Steckdose tragenden Halteelements ein und arretieren dieses somit in einer gewünschten Betriebs- bzw. Außerbetriebsposition. Bei einem Schwenkvorgang in eine andere Position wird das Halteelement, beispielsweise gegen eine Federkraft, aus dem Rasteingriff herausgezogen und so weit gedreht, bis sich die vorkragenden Einrastmittel der Rastscheibe wieder in Deckungslage mit den umfangsverteilt angeordneten vertieften Rastabschnitten des Halteelements befinden und das Halteelement in einer anderen, gewünschten Position arretieren.

Vorzugsweise sind in dem Halteelement vier vertiefte Rastabschnitte und dazu komplementär an der Rastscheibe vier vorkragende Einrastmittel vorgesehen, so daß das Halteelement mit der Steckdose in insgesamt vier verschiedene Positionen, jeweils um 90° versetzt, geschwenkt und arretiert werden kann.

Um die Rastscheibe ihrerseits bewegungssicher zu arretieren, ist erfindungsgemäß vorgesehen, daß die Rastscheibe, alternativ die sie umschließende Kunststoffhülse, an ihrer dem Basiselement zugewandten Außenfläche mit einem zentrisch angeordneten Vielkant (z. B. Drei-, Vier- oder Fünfkant) ausgebildet ist, der in eine komplementäre Öffnung des Basiselements eingreift.

Der Zusammenbau der schwenkbaren Haltevorrichtung erfolgt mittels einer durch das Halteelement, die Rastscheibe bzw die Kunststoffhülse und das Basiselement verlaufenden Durchgangsschraube. Zur Verschraubung der gesamten Einheit sind dann eine Schraubmutter und beispielsweise ein O-Ring, eine Wellscheibe, eine Federscheibe, ein Metallfederelement oder dergleichen in beliebiger Querschnittsform vorgesehen, die ein Federelement darstellen, um das schwenkbare Halteelement über die Rastscheibe gegen das Basiselement vorzuspannen.

Eine vorteilhafte Ausführung sieht vor, daß zwischen dem Basiselement und dem Halteelement ein Feder- und/oder Dichtelement angeordnet ist, vorzugsweise vorgesehen in der offenen Ringfläche der Rastscheibe. Dieses Element, z. B. ein O-Ring, nimmt somit eine geschützte, innenliegende Lage ein.

Weitere Einzelheiten und Vorteile der Erfindung ergeben sich aus den Ansprüchen und der nachfolgenden Beschreibung, in der in den Figuren dargestellte Ausführungsbeispiele der Erfindung näher erläutert werden. Hierbei zeigen:
- Fig. 1: eine die Einzelteile vor dem Zusammenbau einer ersten Ausführung einer schwenkbaren Haltevorrichtung veranschaulichende Explosionszeichnung;
- Fig. 2: die Haltevorrichtung nach Fig. 1 von vorne, von der Seite eines schwenkbaren Halteelements her gesehen;
- Fig. 3: in einem Längsschnitt die Haltevorrichtung nach Fig. 2 von oben gesehen;
- Fig. 4: die Haltevorrichtung nach Fig. 2 in einer Seitenansicht;
- Fig. 5: als Einzelheit eine Rastscheibe der Haltevorrichtung nach Fig. 1 in der Draufsicht;
- Fig. 6: die Rastscheibe nach Fig. 5 von der Seite her gesehen; und
- Fig. 7: eine die Einzelteile vor dem Zusammenbau einer weiteren Ausführung einer schwenkbaren Haltevorrichtung veranschaulichende Explosionszeichnung

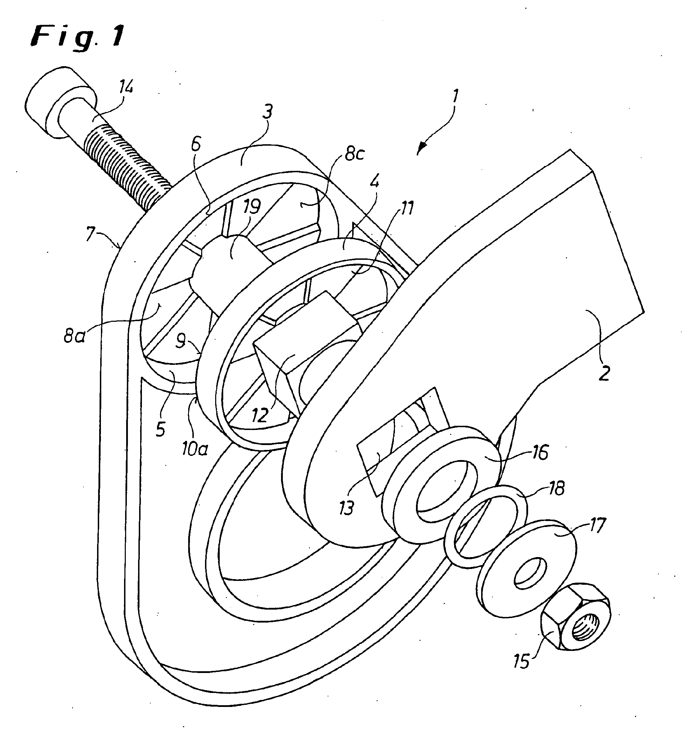

Die in der Fig. 1 dargestellte Haltevorrichtung 1 weist ein Basiselement 2 und ein gegenüber diesem verschwenkbares Halteelement 3 auf. Das Basiselement 2 wird ortsfest an einem - hier nicht dargestellten - Fahrzeug bzw. an einer an dem Fahrzeug befindlichen Anhängevorrichtung angeordnet. An dem verschwenkbaren Halteelement 3 wird eine - hier nicht gezeigte - Steckdose befestigt, in die ein Stecker, beispielsweise eines Anhängers, gesteckt werden kann, um eine elektrische Verbindung von dem Kraftfahrzeug zu dem Anhänger herzustellen.

Das Basiselement 2 und das Halteelement 3 sind durch eine einstückige Rastscheibe 4 lösbar miteinander verbunden. Nach dem Entrasten ist es möglich, das Halteelement 3 mit der Steckdose aus einer relativ tiefliegenden, unter einem Stoßfänger herausragenden Betriebsposition in eine höher gelegene Außerbetriebsposition, insbesondere nicht sichtbar in einen Freiraum zwischen beispielsweise einem Abschlußblech und dem Stoßfänger eines Fahrzeuges wegzuschwenken.

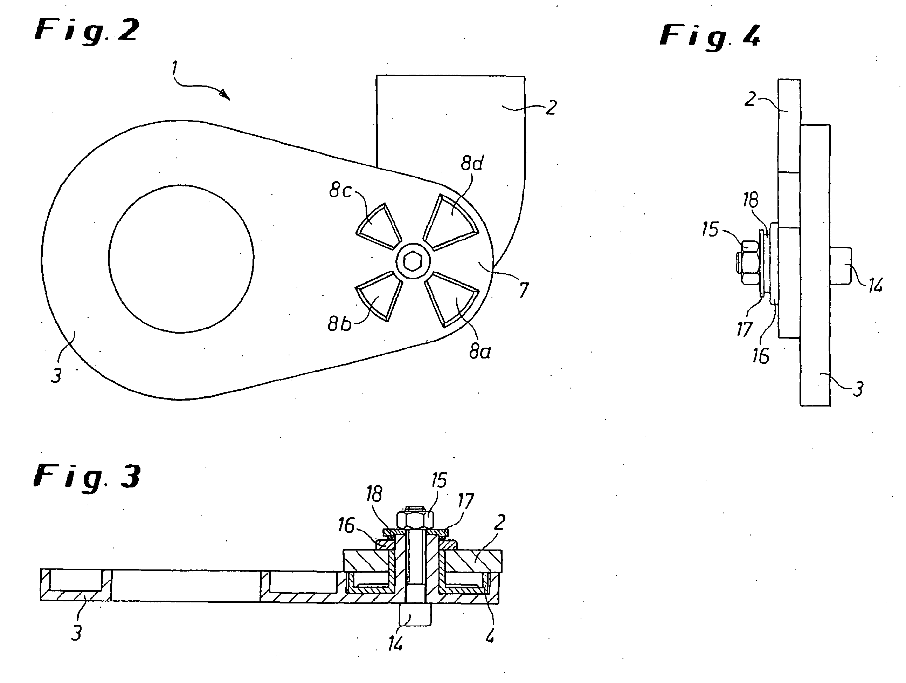

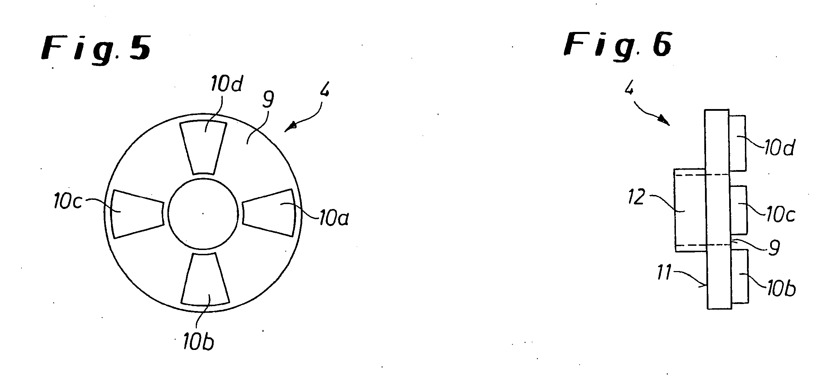

Das schwenkbare Halteelement 3 weist eine kreisförmige Ausnehmung- bzw. - drehung 5 auf, die an der Grundfläche 6 ihrer Stirnwand 7 mit sektorförmigen, als Vertiefung ausgebildeten Rastabschnitten 8a, 8b, 8c,8d versehen ist. Diesen sind an der Außenfläche 9 der kreisförmigen Rastscheibe 4 sektorförmige, vorkragende Einrastelemente 10a, 10b, 10c, 10d zugeordnet sind (vgl. hierzu Fig. 2 bis 5).

In Einbaulage bzw. sowohl in eingeschwenkter Außerbetriebsposition als auch in ausgeschwenkter Betriebsposition wird die Rastscheibe 4 vollständig von der kreisförmigen Ausnehmung 5 des Halteelementes 3 eingekammert, da die überhöhten Einrastelemente 10a, 10b, 10c, 10d der Rastscheibe 4 in dieser Position formschlüssig in die vertieften Rastabschnitte 8a, 8b, 8c, 8d des Halteelementes 3 eintauchen, so daß die Rastscheibe 4 vollständig von der Ausnehmung 5 eingehaust ist (vgl. hierzu Fig. 2 und 3).

Sowohl die Grundfläche 6 der Stirnwand 7 des Halteelementes 3 als auch die Mantelfläche 9 der kreisförmigen Rastscheibe 4 einschließlich der Einrastelemente 10a, 10b, 10c, 10d sind somit nach außen gegen Verschmutzung geschützt, was eine fortwährend glatte Schwenkbewegung des Halteelementes 3 gewährleistet.

Zur Verschwenkung des Halteelementes 3, beispielsweise von einer arretierten Betriebsposition in eine arretierte Außerbetriebsposition, wird das Halteelement 3 gegen eine Federkraft aus dem Rasteingriff herausgezogen und so weit gedreht, bis sich die vorkragenden, hier sektorförmigen Einrastelemente 10a, 10b, 10c, 10d der Rastscheibe 4 wieder in Deckungslage mit den umfangsverteilt angeordneten, vertieften, ebenfalls sektorförmigen Rastabschnitten 8a, 8b, 8c, 8d befinden, worauf das Halteelement 3 in der Außerbetriebsposition eingerastet werden kann. Das Halteelement 3 kann gemäß dem Ausführungsbeispiel in vier verschiedenen Positionen, jeweils um 90° versetzt, arretiert werden.

Des weiteren ist die Rastscheibe 4 bei der Ausführung nach den Fig. 1 bis 6 an ihrer dem Basiselement 2 zugewandten Stirnfläche 11 mit einem zentrisch angeordneten Vierkant 12 ausgebildet, der zur verdrehsicheren Arretierung der Rastscheibe 4 in eine komplementäre Öffnung 13 des Basiselementes 2 eingreift.

Der Zusammenbau der schwenkbaren Haltevorrichtung 1 erfolgt mittels einer durch das Halteelement 3, die Rastscheibe 4 und das Basiselement 2 gesteckten Durchgangsschraube 14. Die gesamte Einheit wird dann über eine Schraubmutter 15, zwei Unterlegscheiben 16, 17 und einen als Federelement wirkenden, hier O-Ring 18 unter einer gewissen Vorspannung miteinander verschraubt. Eine an dem Halteelement 3 vorgesehene Buchse 19 dient zur Lagerung der Rastscheibe 4.

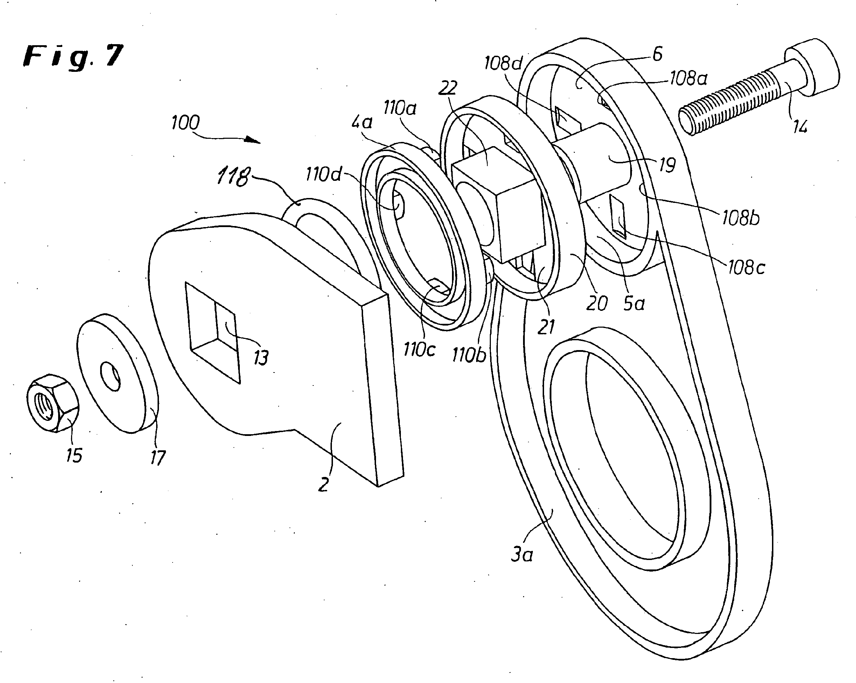

Eine weitere Ausführungsform - in den beiden Ausführungen übereinstimmende Bauteile sind im übrigen mit denselben Bezugsziffern versehen - einer Haltevorrichtung 100 ist in Fig. 7 dargestellt. Diese unterscheidet sich von der vorbeschriebenen Haltevorrichtung 1 im wesentlichen lediglich dadurch, daß die Rastscheibe 4a mittelbar in der Ausnehmung 5a des Halteelementes 3a angeordnet ist. Sie wird konzentrisch von einer Kunststoffhülse 20 umschlossen, die in Einbaulage, d.h. sowohl in eingeschwenkter Außerbetriebsposition als auch in ausgeschwenkter Betriebspositon vollständig von der kreisförmigen Ausnehmung 5a des Halteelementes 3a eingekammert wird.

Des weiteren ist die Kunststoffhülse 20 an ihrer dem Basiselement 2 zugewandten Stirnfläche 21 mit einem zentrisch angeordneten Vierkant 22 ausgebildet, der zur verdrehsicheren Arretierung der Rastscheibe 4a in eine komplementäre Öffnung 13 des Basiselementes 2 eingreift. Zur Formschlußverbindung sind auch hier einerseits an der Rastscheibe 4a vorkragende Einrastelemente 110a, 110b, 110c und 110d und andererseits in der Grundfläche 6 der Ausnehmung 5a vertiefte, konturangepaßte Rastabschnitte 108a, 108b 108c und 108d ausgebildet.

Bei dieser Ausführung ist das Feder- und/oder Dichtelement 118 (O-Ring) innenliegend zwischen dem Basiselement 2 und dem Halteelement 3 a in der offenen Ringfläche der Rastscheibe 4 a angeordnet.

## Patentansprüche

1. Haltevorrichtung (1) für eine Steckdose zur Bildung einer elektrischen Verbindung zwischen einem ziehenden und einem gezogenen Fahrzeug, wobei die Haltevorrichtung ein Basiselement (2), das am ziehenden Fahrzeug bzw. seiner Anhängevorrichtung montierbar ist, und ein schwenkbares Halteelement (3) für die Steckdose aufweist, das gegenüber dem Basiselement (2) verschwenkbar ist, und
das Basiselement (2) und das schwenkbare Halteelement (3,3a) über eine Rastscheibe (4,4a) miteinander verbunden sind, **dadurch gekennzeichnet dass** die Rastscheibe (4,4a) in Einbaulage vollständig in eine komplementäre Ausnehmung (5,5a) des schwenkbaren Halteelements (3,3a) eintaucht.

2. Haltevorrichtung nach Anspruch 1,
**dadurch gekennzeichnet,**
**daß** die Rastscheibe (4a) unter Zwischenschaltung einer sie konzentrisch umschließenden Kunststoffhülse (20) in der Ausnehmung (5a) angeordnet ist.

3. Haltevorrichtung nach Anspruch 1 oder 2,
**dadurch gekennzeichnet,**
**daß** in der Ausnehmung (5,5a) des schwenkbaren Halteelements (3,3a) und an der Rastscheibe (4,4a) ineinandergreifende Formschlußverbindungselemente (8a, 8b, 8c, 8d; 108a, 108b, 108c, 108d und 10a, 10b, 10c, 10d; 110a, 110b, 110c, 110d) ausgebildet sind.

4. Haltevorrichtung nach einem der Ansprüche 1 bis 3,
**dadurch gekennzeichnet,**
**daß** das schwenkbare Halteelement (3,3a) eine kreisförmige Ausnehmung (5,5a) aufweist, in deren Grundfläche (6) verteilt angeordnet vertiefte Rastabschnitte (8a, 8b, 8c, 8d; 108a, 108b, 108c, 108d) ausgebildet sind, denen in situ an der dem Halteelement (3,3a) zugewandten Stirnfläche (9; 109) der kreisförmigen Rastscheibe (4,4a) vorkragende Einrastelemente (10a, 10b, 10c, 10d; 110a, 110b, 110c, 110d) zugeordnet sind.

5. Haltevorrichtung nach einem der Ansprüche 1 bis 4,
**dadurch gekennzeichnet,**
**daß** die Rastscheibe (4) an ihrer dem Basiselement (2) zugewandten Außenfläche (11) mit einem zentrisch angeordneten Vielkant (12) ausgebildet ist, der in eine Öffnung (13) im Basiselement (2) eingreift.

6. Haltevorrichtung nach einem der Ansprüche 2 bis 4,
**dadurch gekennzeichnet,**
**daß** die Kunststoffhülse (20) an ihrer dem Basiselement (2) zugewandten Stirnfläche (21) mit einem zentrisch angeordneten Vielkant (22) ausgebildet ist, der in eine komplementäre Öffnung (13) des Basiselementes (2) eingreift.

7. Haltevorrichtung nach Anspruch 6,
**dadurch gekennzeichnet,**
**daß** zwischen dem Basiselemt (2) und dem Halteelement (3 a) ein Feder- und/oder Dichtelement (118) angeordnet ist.

## Claims

1. Retaining device (1) for a socket for forming an electrical connection between a pulling vehicle and a pulled vehicle, wherein the retaining device has a base element (2), which can be mounted on the pulling vehicle or the towing device thereof, and a pivotable retaining element (3) for the socket, which can be pivoted with respect to the base element (2), and the base element (2) and the pivotable retaining element (3, 3a) are connected to each other by means of a locking disc (4, 4a), **characterised in that** the locking disc (4, 4a) when in the installed position is completely sunk into a complementary recess (5, 5a) in the pivotable retaining element (3, 3a).

2. Retaining device according to Claim 1,
**characterised in that**
the locking disc (4a) is arranged in the recess (5a) with interposition of a plastic sleeve (20) concentrically surrounding the said locking disc.

3. Retaining device according to Claim 1 or 2,
**characterised in that**
interlocking form-fitting connection elements (8a, 8b, 8c, 8d; 108a, 108b, 108c, 108d and 10a, 10b, 10c, 10d; 110a, 110b, 110c, 110d) are formed in the recess (5, 5a) of the pivotable retaining element (3, 3a) and on the locking disc (4, 4a).

4. Retaining device according to one of Claims 1 to 3,
**characterised in that**
the pivotable retaining element (3, 3a) has a circular recess (5, 5a), in the base face (6) of which recessed locking sections (8a, 8b, 8c, 8d; 108a, 108b, 108c, 108d) are distributed, which are associated in situ with projecting latching elements (10a, 10b, 10c, 10d;
110a, 110b, 110c, 110d) on the end face (9; 109) of the circular locking disc (4, 4a) facing the retaining element (3, 3a).

5. Retaining device according to one of Claims 1 to 4,
**characterised in that**
the locking disc (4) is formed with a centrally arranged polygon (12) on the outer face (11) thereof facing the base element (2), which polygon engages in an opening (13) in the base element (2).

6. Retaining device according to one of Claims 2 to 4,
**characterised in that**
the plastic sleeve (20) is formed with a centrally arranged polygon (22) on the end face (21) thereof facing the base element (2), which polygon engages in a complementary opening (13) in the base element (2).

7. Retaining device according to Claim 6,
**characterised in that**
a spring and/or sealing element (118) is arranged between the base element (2) and the retaining element (3a).

## Revendications

1. Dispositif de retenue (1) pour une prise pour former une liaison électrique entre un véhicule tirant et un véhicule tiré, le dispositif de retenue présentant un élément de base (2), qui peut être monté sur le véhicule tirant ou son dispositif d'attelage, et un élément de retenue (3) basculant pour la prise, lequel peut être basculé par rapport à l'élément de base (2), et
l'élément de base (2) et l'élément de retenue (3, 3a) basculant étant reliés l'un à l'autre au moyen d'un disque d'arrêt (4, 4a), **caractérisé en ce que** le disque d'arrêt (4, 4a) s'engage dans la position de montage entièrement dans un évidement (5, 5a) complémentaire, de l'élément de retenue (3, 3a) basculant.

2. Dispositif de retenue selon la revendication 1,
**caractérisé en ce que**
le disque d'arrêt (4a) est disposé dans l'évidement (5a) avec l'intercalation d'un manchon plastique (20) l'entourant de façon concentrique.

3. Dispositif de retenue selon la revendication 1 ou 2,
**caractérisé en ce que**
des liaisons à complémentarité de forme (8a, 8b, 8c, 8d ; 108a, 108b, 108c, 108d et 10a, 10b, 10c, 10d ; 110a, 110b, 110c, 110d) s'engageant les unes dans les autres sont conçues dans l'évidement (5, 5a) de l'élément de retenue (3, 3a) basculant et sur le disque d'arrêt (4, 4a).

4. Dispositif de retenue selon l'une quelconque des revendications 1 à 3,
**caractérisé en ce que**
l'élément de retenue (3, 3a) basculant présente un évidement (5, 5a) circulaire, dans la surface de base (6) duquel sont réalisés des tronçons d'encliquetage (8a, 8b, 8c, 8d ; 108a, 108b, 108c, 108d) évidés et disposés de façon répartie, tronçons auxquels sont attribués in situ des éléments d'encliquetage (10a, 10b, 10c, 10d ; 110a, 110b, 110c, 110d) qui avancent sur la face frontale (9 ; 109), associée à l'élément de retenue (3, 3a), du disque d'arrêt (4, 4a) circulaire.

5. Dispositif de retenue selon l'une quelconque des revendications 1 à 4,
**caractérisé en ce que**
le disque d'arrêt (4) est conçu sur sa surface extérieure (11) associée à l'élément de base (2) avec un polyèdre (12) disposé de façon centrée qui s'engage dans une ouverture (13) dans l'élément de base.

6. Dispositif de retenue selon l'une quelconque des revendications 2 à 4,
**caractérisé en ce que**
le manchon plastique (20) est conçu sur sa face frontale (21) associé à l'élément de base (2) avec un polyèdre (22) disposé de façon centrée qui s'engage dans une ouverture (13) complémentaire de l'élément de base (2).

7. Dispositif de retenue selon la revendication 6,
**caractérisé en ce que**
un élément à ressort et/ou un élément d'étanchéité (118) est disposé entre l'élément de base (2) et l'élément de retenue (3a).
